# EUROPEAN PATENT SPECIFICATION

(11) **EP 3 250 529 B1**
(45) Date of publication and mention of the grant of the patent: **03.07.2019**
(21) Application number: 16702081.7
(22) Date of filing: 28.01.2016
(51) Int. Cl.: C03B 19/08, C03B 19/02, C03C 11/00

(54) **APPARATUS AND METHOD FOR THE PRODUCION OF FOAMED GLASS BY EXTRUSION**
VORRICHTUNG UND VERFAHREN ZUR HERSTELLING VON SCHAUMGLAS DURCH EXTRUSION
APPAREIL ET PROCÉDÉ POUR LA FABRICATION DE VERRE MOUSSE PAR EXTRUSION

(30) Priority: 29.01.2015 US 201562109084 P
(43) Date of publication of application: 06.12.2017
(73) Proprietor: Glassolite Ltd, Windosor SL4 1TX (GB)
(72) Inventor: SOLVANG, Finn, Erik, 3120 Nøtterøy (NO); SVEINSBØ, Gunnar, N-5179 Godvik (NO)
(74) Representative: Onsagers AS
(86) International application number: PCT/EP2016/051785
(87) International publication number: WO 2016/120374

(56) References cited:
- WO-A1-2011/087373
- WO-A1-2015/169749
- DE-U1-202014 004 111
- US-A- 2 255 237
- US-A- 4 208 367
- US-A- 4 552 577

## Description

### Field of the invention

The invention relates to extruded foamed glass, more particularly to an apparatus and method for producing various lightweight products of extruded, sealed, foamed glass.

### Background

Foamed glass traditionally consists of crushed, finely ground recycled glass having a fraction size of from 0 - 700 microns with an added reactive ingredient and one or more oxidants. To be able to grind the glass to a fraction size of less than 700 microns, the glass must be dried before grinding. After admixing, the mixture is passed into a preheated furnace and heated gradually to a temperature of from 750 - 960 degrees Celsius, depending on the choice of additives. After the reaction is finished, the product is cooled according to an established program depending on the end product.

Traditionally, the production of foamed glass is carried out in an open process where the finished foamed glass is either crushed into the desired fraction size or cut into blocks or other desired profiles and elements. This means that in fractured and cut surfaces an open cell structure is produced that is capable of absorbing water. The weight of the finished product will increase on absorption of water, and at the same time the insulating properties will be impaired. In addition, the fractured surfaces are porous and during bulk transport of the pellets some of the product will be crushed to a size that is not suitable for use, resulting in wastage.

Traditional production of foamed glass involves large generation of dust both in connection with pre-processing and finishing of the different products, and the process itself is highly energy-intensive as it takes place in an open process at atmospheric pressure.

The traditional method requires the admixture of glass flour and additives to be homogeneous before it is passed on for melting. This is necessary to obtain a cell structure that is as homogeneous as possible after the exothermal process is finished and all the gases have been distributed in the melted glass, and also to obtain the desired low density in the end product.

Known prior art in the field includes WO 2011/087373 by the same applicant, which discloses an apparatus for the production of foamed glass comprising a dosing screw, feed chamber for receiving a glass mixture, said glass mixture comprising crushed or ground glass mixed with a foaming agent, a pressure vessel arranged to receive a volume of glass mixture and an extruder chamber subjected to a positive pressure.

### Summary of the invention

The present invention is defined in the independent claims.

The present invention comprises an apparatus and a method based on mixing a reactive ingredient with one or more oxidants in order then to add them to crushed glass having a fraction size of 0 - 6 mm, before delivery via a sluice system to an extruder chamber that is under positive pressure. Normally, from 3 - 10% foaming agent consisting of a reactive ingredient and an oxidant is added to crushed glass.

Examples of reaction equations used during this method:

SiC+4MnO₂ -> SiO₂+4MnO+CO₂

½ Si₃N₄+3MnO₂ -> ³/₂SiO₂+3MnO+N₂

The mixture is heated to 900 degrees C solely by means of indirect inductive heating under positive pressure in an extruder chamber. From about 900 degrees C, the direct resistive heating acts on the glass melt and the mixture is heated further to a temperature of from 1000 - 1150 degrees C depending on the type of foaming agent and on the positive pressure used. As the resistive heating acts directly on the glass melt, a constant temperature of the glass melt is secured towards the end of the process such that the foamed glass that is passed towards the nozzles by means of positive pressure has a viscosity which is as even as possible. This, together with a positive pressure, ensures maximally homogeneous distribution and size of the gas bubbles on extrusion.

Depending on temperature and type of foaming agent, the positive pressure will normally be between 1 and 10 bar during production. When the exothermic process nears the end, the finished foamed glass is passed out of the extruder chamber via one or more nozzles into a heated zone of lower pressure where it is allowed to expand until atmospheric pressure is reached, this zone hereafter referred to as expansion chamber. The fact that the foamed glass is passed out through a nozzle at positive pressure and having almost the same viscosity means that the cells, on expansion, keep their cell walls intact. This gives a closed cell structure which is both watertight and, to a large extent, gastight. In addition, there is an increase in compressive strength. Since the process is carried out under positive pressure and at a higher temperature than traditional foamed glass production, a lower viscosity of the melted glass is obtained, together with an attendant improved distribution of gases in the glass melt, even though the fraction size of the added glass is significantly higher. This means that the present invention can use a coarser fraction of the glass used as raw material than the prior art, and that the additives do not need to be absolutely homogeneously admixed for a homogenous cell structure to be obtained in the finished product. This gives substantial cost savings in connection with the purchase and processing of raw materials. At the same time, a homogenous cell structure with sealed surface gives a greater compressive strength than traditional foamed glass, lower water absorption in the surface and less crushing and wastage during transport.

The fact that the process takes place under pressure and in a closed extruder chamber with both inductive and resistive heating results in a significant reduction of dust, whilst energy loss is reduced and better control of heat recovery is obtained. All told, this gives lower operating costs and lower energy costs as well as greater environmental advantages than traditional foamed glass production.

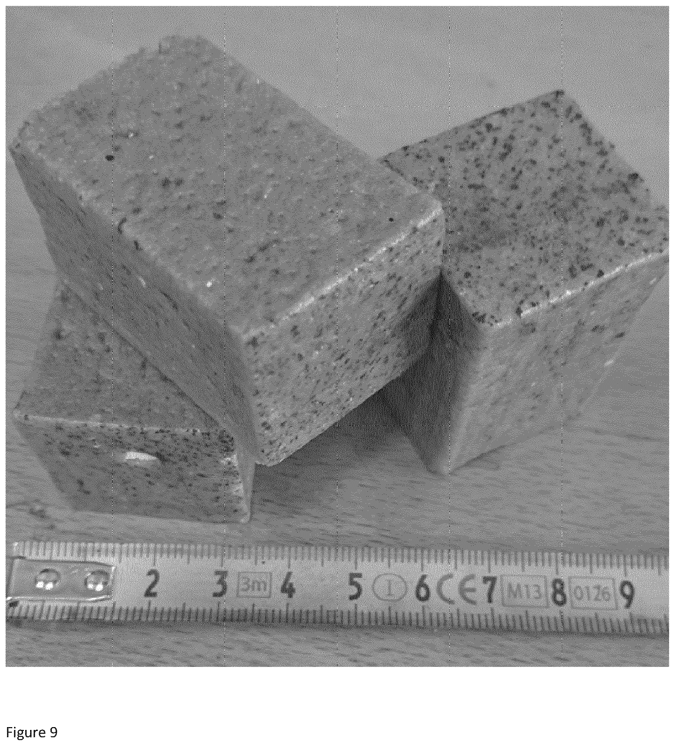

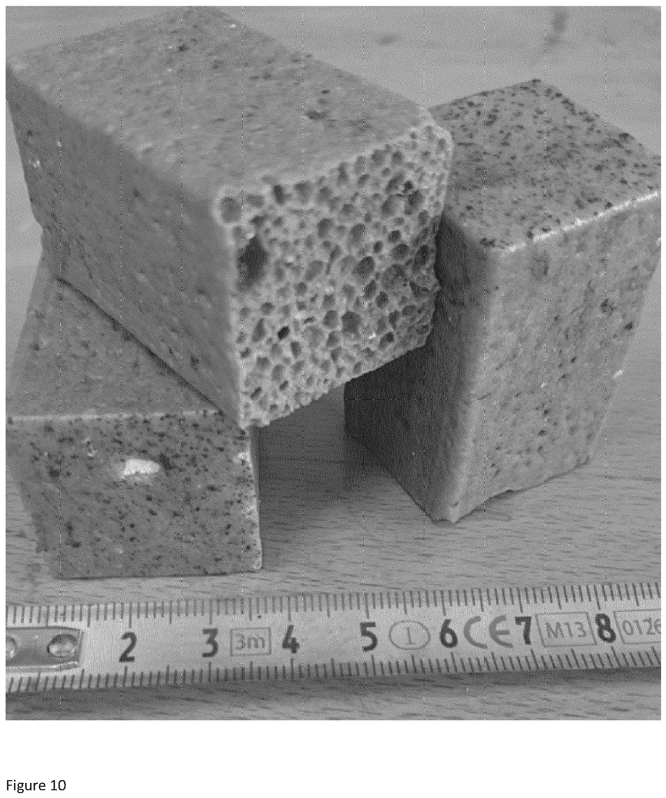

According to an aspect of the invention, a liquid foamed glass is formed under pressure, which is used to make different types of extruded foamed glass products, of different shape, size, density and compressive strength. At the same time, the process results in the finished products having an almost glassy and watertight surface (see Figure 9). According to an aspect of the invention, the foamed glass is cut up whilst it is still liquid and the moulds used are heated, thereby preventing the formation of an open cell structure in fractured and cut surfaces. This makes the product more water-resistant and also reduces the generation of dust associated with the working of the finished product. See Figures 9 and 10 below.

According to another aspect of the invention, foamed glass is passed under positive pressure out of the extruder chamber via different nozzles and onto a heated belt in the form of one or more "sausages", in order then to cut these "sausages" up into different sizes, normally from 10 - 60 mm. Typical products here will be lightweight insulating materials for transport (road, rail, airports, bridge abutments), construction pits (compensated foundations, in-ground insulation and backfilling), sports installations (artificial grass pitches, shale pitches, rehabilitation of pitches, paths and tracks), and water and sewage (ditches for water mains, branch lines, long-distance heating). After cutting, expansion and cooling, these products emerge having an impermeable sealed surface with closed cells (see Figure 9).

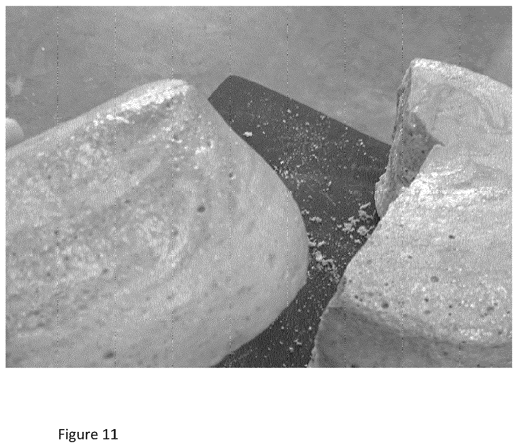

An alternative to foamed glass "sausages" is to pass the foamed glass onto the conveyor belt via a wide nozzle in order then to lay down a sheet (curtain), which is later crushed into desired fractions. Open cells may be formed in fractured surfaces on these products (see Figure 11).

According to another aspect of the invention, the method consists of passing foamed glass under positive pressure out via different nozzles into an externally heated expansion chamber of different shape, in order then to cut the glass up into different lengths, for example, pellets. These lightweight pellets will then be given a sealed surface on all edges, even in the cut surfaces. This makes the products highly water-resistant. The cutting mechanisms can utilise heated air under high pressure or a suitably hard heat-resistant material to cut the pellets.

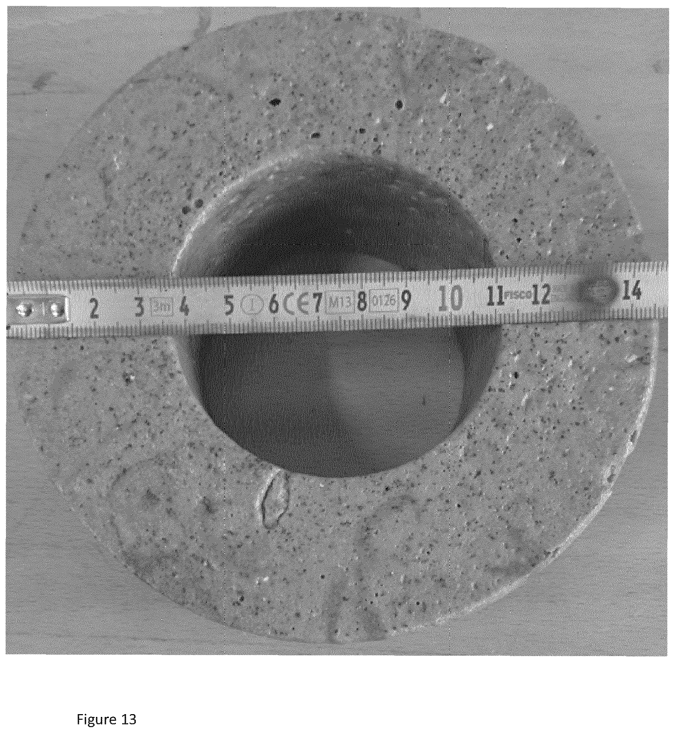

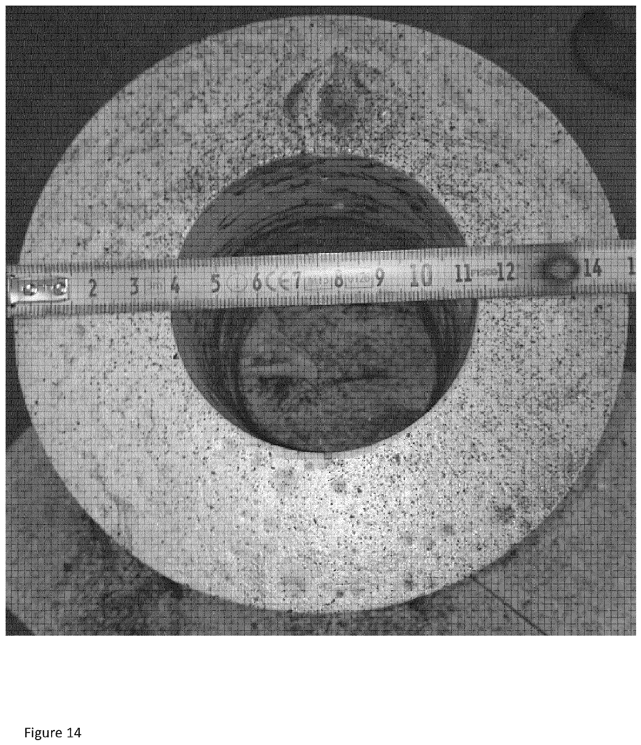

According to another aspect of the invention, a tubular product of extruded foamed glass is formed. See Figures 13 and 14 below. The product is made via vacuum casting, die casting, pressure die casting or by using centrifugal casting, to fill a mould with liquid foamed glass in order then to cast whole or half hollow sections and whole or half tubular elements. The hollow sections and tubular elements can then be assembled into a tubular product of extruded foamed glass. The product is useful as fireproofing and/or thermal insulation for both offshore and onshore installations in the oil and gas industry, as wet insulation subsea, and fire protection of electric cable ducts and other technical infrastructure. An advantage of the tubular product made by the present method is that the product will have a sealed surface on both the inside and the outside of the hollow sections and tubular elements (see Figures 13 and 14 below). This gives an increased degree of water resistance and less friction against the pipe surfaces. At the same time, sealed foamed glass according to the invention is virtually chemically neutral and non-electroconductive, with a significantly smaller risk of corrosion and electrochemical corrosion of the pipes on contact with water, especially salt water, than traditional foamed glass products for use in the oil and gas sector.

The production of foamed glass according to the invention can be carried out by a continuous delivery of raw materials that are surface-melted in the extruder chamber via inductive heating, or as a batch-wise production where a suitable dose is added to a reaction chamber and melted at a desired temperature. Introduction into a mould will then also take place batch-wise, but based on the same casting principles.

All processing of the expanded foam takes place at temperatures of between 900 degrees and 1150 degrees Celsius in the expansion chamber. The finished products are subsequently cooled in accordance with an established cooling routine to remove tensions in the product and obtain desired cell size and surface structure.

The fact that the method is based on relatively small closed production units means that these units can be mobile, unlike traditional production that takes place in large and partly open furnaces that are stationary. Altogether, this gives lower investment costs per unit of foamed glass produced than traditional production, and means that, if required, production may be located where the customer is. This may be relevant, inter alia, where there are large road projects that need lightweight materials for insulation of the roadway. All in all, this reduces the transport costs.

A new material of foamed glass with unique cell structure and a sealed, glassy surface is also described.

### Brief description of the drawings

The invention will be described in more detail with reference to the attached drawings, wherein:
Figure 1 shows a half section of an induction extruder with associated machine elements for production of extruded foamed glass under positive pressure.
Figure 2 shows a section of the lower part of a feed section for raw material delivery.
Figure 3 shows a section of an upper extruder flange/end plate.
Figure 4 shows a half section of a lower extruder flange/end plate.
Figure 5 shows an upper nozzle section for production of pellets.
Figure 6 shows an upper nozzle section intended for printing of foamed glass.
Figure 7 shows a section of a raw material feed section.
Figure 8 shows a section of a raw material feed section seen from above.
Figure 9 shows a sealed pellet.
Figure 10 shows a section of a sealed pellet.
Figure 11 shows crushed extruded foamed glass.
Figure 12 shows extruded foamed glass in a mould.
Figure 13 shows a hollow section of extruded foamed glass with SiC as reactive ingredient.
Figure 14 shows a hollow section of extruded foamed glass with Si₃N₄ as reactive ingredient.

### Detailed description

The invention will now be described with reference to the drawings, which show an induction extruder for production of extruded foamed glass under positive pressure.

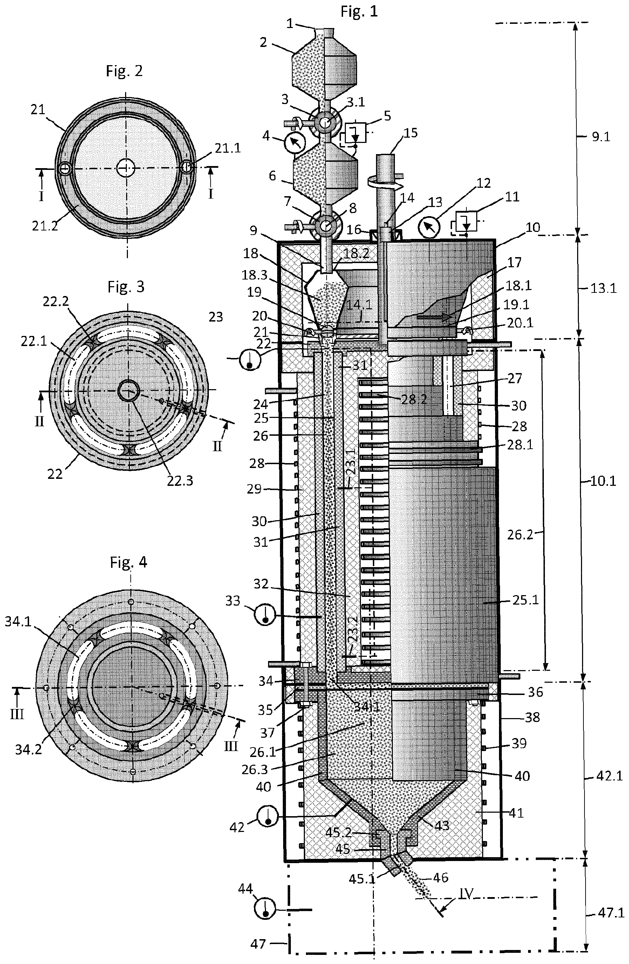

The reference numeral 1 indicates an inlet for filling a glass flour mixture from the main silo.
2 indicates a dosing chamber.
3 indicates a ball valve.
3.1 indicates the valve in a closed position.
4 indicates a pressure manometer.
5 indicates a pressure regulator.
6 indicates a sluice chamber.
7 indicates a ball valve.
8 indicates the valve in a closed position.
9 indicates a discharge pipe from the ball valve.
9.1 indicates a sluice section.
10 indicates an outer pressure vessel for the feed section.
10.1 indicates an extruder section.
11 indicates a pressure regulator.
12 indicates a pressure sensor/manometer.
13 indicates a vertically arranged stirring device for levelling the surface of the glass mixture in the feed chamber.
13.1 indicates the feed section.
14 indicates a sensor for level measurement of the glass flour mixture in the feed chamber.
14.1 indicates the 0 level of the glass flour mixture in the feed chamber.
15 indicates a rotating drive shaft for the feed chamber.
15.1 indicates a motor for operation of the feed chamber.
16 indicates a bearing with seal and collar.
17 indicates a heat-insulating material.
18 indicates a rotating feed chamber.
18.1 indicates the rotational direction of the feed chamber.
18.2 indicates a circular slot opening at the top of the feed chamber.
18.3 indicates the glass flour mixture in the feed chamber.
19 indicates spherical impeller 1.
19.1 indicates spherical impeller 2.
20 indicates a rotating impeller shaft.
20.1 indicates a rotating impeller shaft.
21 indicates a section of the base plate for feed chamber Fig. 2.
21.1 indicates a throughgoing chamfered hole for passage of glass flour mixture from impeller.
21.2 indicates a trapeziform groove.
21.3 indicates a throughgoing chamfered hole for passage of glass flour mixture from impeller.
21.4 indicates a driver plate, bottom.
21.5 indicates a driver plate, top.
22 indicates a section of upper extruder flange/end plate Fig. 3
22.1 indicates throughgoing slot opening, 5 in number, for passage of the glass flour mixture.
22.2 indicates associated spacer for the structure that forms the distance between outer and inner extruder pipe, 5 in number.
22.3 indicates a bearing element for radial and axial loading.
23 indicates a manometer for 2 sensors internal heat.
23.1 indicates a heat sensor for inner extruder pipe, upper section.
23.2 indicates a heat sensor for inner extruder pipe, lower section.
24 indicates glass flour mixture in free fall in radial and axial slot opening.
25 indicates decomposition zone/level.
25.1 indicates an outer pressure vessel for the extruder section.
26 indicates decomposition of the glass flour mixture in the preliminary phase.
26.1 indicates the expansion chamber in the nozzle section.
26.2 indicates the axial slot height in the extruder chamber.
26.3 indicates expanding glass mass.
27 indicates radial and axial slot opening for the glass flour mixture.
28 indicates the cut surface of external induction coil tube, extruder.
28.1 indicates the external profile of the induction coil.
28.2 indicates the internal profile of the induction coil.
29 indicates the external location of heat-insulating material.
30 indicates a half sectional surface of the outer extruder pipe.
31 indicates a half sectional surface of the inner extruder pipe.
32 indicates a half section of inner heat-insulating material.
33 indicates a manometer for heat sensor, outer extruder pipe.
34 indicates a section of lower extruder flange/end plate Fig. 4
34.1 indicates throughgoing slot opening, 5 in number, for passage of decomposed glass flour mixture 26.3 .
34.2 indicates associated spacer for the structure which forms the distance between the outer and inner extruder pipe, 5 in number.
35 indicates a heat-resistant gasket.
36 indicates a flange for the nozzle section.
37 indicates machine screws for releasable joining/connection between extruder section and nozzle section.
38 indicates an outer vessel/casing for the nozzle section.
38.1 indicates the nozzle section.
39 indicates the cut surface of external induction coil tube, nozzle section.
40 indicates an upper tubular element, belonging to nozzle section.
41 indicates heat-insulating material.
42 indicates a manometer with associated heat sensor for registering the temperature in the nozzle section.
42.1 indicates an upper nozzle section.
43 indicates a lower tubular element ahead of the nozzle.
44 indicates a manometer with associated heat sensor for registering the temperature inside and outside the nozzle.
45 indicates a replaceable nozzle for x number of variants of profile choice of extruded foamed glass products.
45.1 indicates decomposed glass flour mixture on its way through the nozzle in the expansion phase.
45.2 indicates a variant of a T-groove profile for rapid changes of nozzle profile.
46 indicates extruded foamed glass outside nozzle in final expansion phase.
47 indicates hot zone with heating element for the nozzle and final expansion phase.
47.1 indicates a lower nozzle section.

A detailed description of the invention.

Fig. 1 shows a half section of an extruder with associated machine elements for production of high-grade insulation material and fireproofing components where glass, largely from recycling, is included as basic material.

A more detailed description shows receiving opening 1, glass flour mixture to the dosing chamber 2 where a given amount is waiting for further transport to the sluice chamber 6 when valve 3 opens from a closed position 3.1 on a given signal from pressure regulator 5 when the pressure is reduced to 0 bar positive pressure provided by level sensor 14 at min. level 0 14.1 in feed chamber 18.

When a given amount of glass flour mixture is let into the sluice chamber 6, valve 3 is closed to position 3.1 and pressure regulator 5 is activated to supply pressure equal to the pressure in the feed chamber 18. Now valve 7 can open from closed position 8 and a given amount of glass flour mixture can be drawn into the feed chamber 18, through discharge pipe 9 and valve 7 can be closed to position 8 and one sluice sequence has been carried out at a given positive pressure 12. Pressure vessel 10 constitutes one closed system, which surrounds associated extruder elements and is constructed for positive pressure, adapted to the production process.

Pressure regulator 11 can be remote-controlled and set at a given pressure 12, adapted to each individual production type/quality of extruded foamed glass.

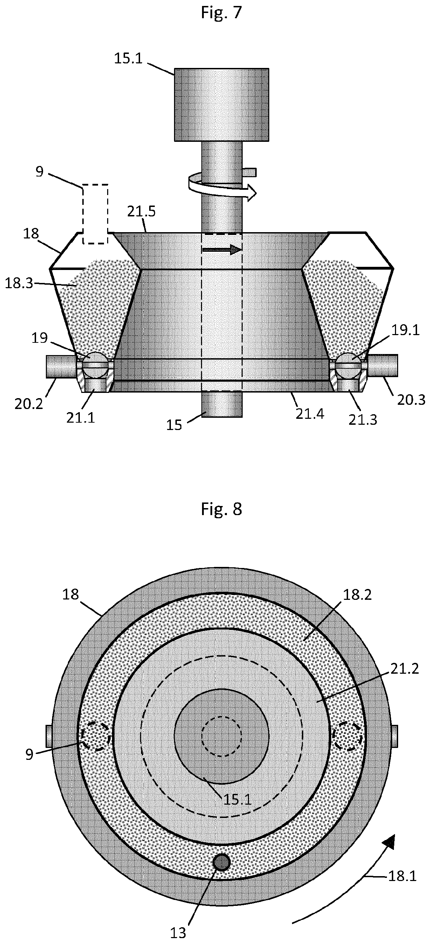

The feed chamber 18, Fig. 7 and Fig. 8 on a larger scale, constitutes a rotating ring 18.1 formed as a trapeziform vessel with a circular slot opening 18.2 at the top, is mechanically connected to drive shaft 15 by radial bearing 16 and radial/axial bearing 22.3, and rotates continuously at a given rotational speed.

To even out delivered glass flour mixture 18.3 in the feed chamber 18, a stirrer 13 is mounted vertically and centred in the slot opening 18.2 with lowest stirring level 14.1 to ensure steady supply of glass flour mixture from max to min level, to impellers 19,19.1 with the task of dosing/supplying an adapted mass of glass mixture through holes 21.1,21.3 Fig. 2 through slot openings 22.1 Fig. 3 to free fall slot/chamber 24, to the surface 25 of the decomposition zone where the glass flour mixture is evenly distributed radially 360° and is supplied here with heat from outer and inner extruder pipes 30,31, the heating energy being provided by associated induction coils 28,28.2. Induction coils 28.2 are located internal to the glass four mixture, while induction coils 28 are located external to the glass flour mixture.

The induction principle here constitutes an efficient heating with good regulation properties for automation and automatic control where the temperature 23,33,42,44 can be monitored manually.

The preliminary decomposition phase starts in zone 26 where the glass mixture adopts a given temperature 23, 23.1, 23.2 which starts and maintains a combustion process with chemical expansion at a given viscosity and positive pressure 11,12 in the pressure vessel 10. The distance between outer and inner extruder pipes 30,31 produced of, inter alia, graphite, constitutes the slot opening 27 and is of major importance for the heating rate of the glass flour mixture and may thus have a regulatory factor in the production process. The extruder pipes can also be constructed of steel or other electrically conductive material that suitable for both inductive heating or resistive heating.

The radial slot opening 27 of a given diameter forms a surface area, and by multiplying this by the height of the vertical slot opening 26.2, we can calculate the volume capacity of the extruder, and input to outer and inner induction coil 30,31.

Satisfactory insulation 29,32 is arranged between respectively outer and inner extruder pipes 30,31 and induction coils 28,28.2 to prevent loss, and thereby ensure that the induction coils 28,28.2 surrounding heat is kept as low as possible.

Practice shows that the production process calls for a control sequence with small tolerances with regard to temperature 23,33,42,44, pressure 11,12 relative to the volume of decomposed glass flour mixture 26, where supplied heat by induction can meet the requirements of good control properties.

Upper nozzle section 42.1 is connected to extruder section 10.1 where the lower extruder flange 34 in half section based on section course III Fig. 4 and flange 36 with associated screw connection 37 and gasket device 35 of heat-resistant material provide a tight connection to resist positive pressure.

Extruder flange 34 in half section Fig. 4 shows throughgoing slot openings 34.1 for point of passage for expanding glass mass 26.3 limited by spacers 34.2 up to the expansion chamber 26.1 in upper tubular element 40 where the combustion is completed based on a given period of time before the expanding glass mass 26.3 at a given positive pressure 12 from pressure regulator 11 and temperature 42 is kept constant by induction coil 39. In addition by supplied thermal energy from the resistance effect that occurs when a current is led directly through the expanding glass mass which starts to conduct current from about 900°C. A combination of heat provided from induction and heat from the electrical resistance that the liquid glass mass constitutes in a current circuit can provide large and effective heat capacity, for which there is a great need here.

The expanding glass mass is driven onwards due to positive pressure, to lower tubular element 43 where nozzle device 45 has x number of variants of profiles to choose between for the nozzle opening 45.1 and has alternative rapid replacement device 45.2 which makes it easy to change nozzle profile 45. to desired product profile 45.1.

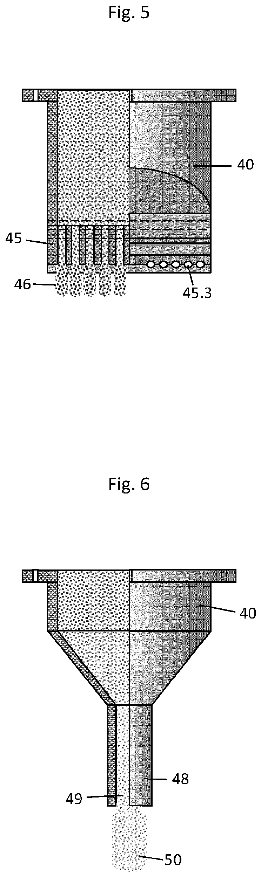

Fig. 5 shows upper nozzle section 42.1 that is mounted on extruder Fig.1 with a nozzle variant 45 in lower nozzle section 47.1 for production of pellets having any shape, profile and size the customer would like.

Fig. 6 shows upper nozzle section 42.1 with a nozzle variant 48 in lower nozzle section 47.1 designed for 3D printing of foamed glass into moulds or the like as shown in Figures 13 and 14. The nozzle 48 is adapted to the product that is made by choosing nozzle profile 49, the shape and amount of foam exiting the nozzle 50 per time unit.

When the product exits the nozzle 45.1 for final expansion 46 outside the nozzle at atmospheric pressure or lower at given constant temperature 44, the optimal heat is provided by heating element/induction in the hot zone 47. and nozzle section 47.1.

In this area, the expanding glass mass is given an essential and adapted heat treatment to ensure that combustion ceases owing to a lack of combustible material, thereby ending further expansion. The purpose of further heat treatment is to remove detrimental tensions and thus increase toughness and compressive strength of the finished product.

### Various aspects / details of the invention

According to one aspect, reactive ingredient (SiC or Si₃N₄) and one or more oxidants, for example, MnO₂, are stirred together before they are added to glass powder from recycled glass. This is to ensure that as many reactive particles as possible come into direct contact with one or more oxidants such that the combustion is as efficient as possible

According to an aspect of the invention, raw materials are preheated so as to reduce the time it takes to melt the glass in the extruder chamber. Preheating temperature is adapted to the glass material used, but is not set so high that the glass sticks. An example of temperatures can be in the range of 200 - 400 degrees Celsius.

It is advantageous that the total area of the nozzles is proportional to the extruder chamber volume such that desired pressure and speed of the process can be reached. An example of this can be a volume of 9.6 litres and an area of nozzle corresponding to 7 mm².

The smaller the ratio between total area of the nozzles and extruder chamber, the larger the pressure that can be obtained.

According to another aspect of the invention, it is possible to prevent air bubbles from merging together to form larger bubbles immediately prior to the expansion phase by incorporating fine particles, so-called nucleating agents, in the glass flour before it is added to the extruder chamber under positive pressure. For instance, 0.1 -1% kaolin powder having a particle size of 10 microns can be mixed into glass flour having a particle size of 0 - 100 microns before it is added to the extruder chamber under 3 bar pressure.

According to the invention, an almost glassy sealing of the surface can be obtained by allowing the fully expanded glass foam to remain a given time in the expansion chamber before a controlled and gradual cooling is started. An example of this may be 3 - 5 min residence time at a temperature of between 980 -1040 degrees Celsius. According to an aspect of the invention, the density of the foam that is to be obtained can be determined. This can be done by changing fraction size of the glass material, the amount of reactive ingredient (SiC or Si₃N₄), the amount and fraction size of the oxidant and the pressure and temperature utilised in the extrusion chamber.

According to an exemplary embodiment, resistive heating is used on the lower half of the extruder chamber where the glass melt passes 900 degrees C to secure a glass melt temperature that is as constant as possible, with associated homogeneous viscosity and hence a homogeneous distribution of the bubbles formed by the decomposition. The effect of resistive heating will be greater the higher the temperature of the glass melt.

According to an aspect of the invention, the type of surface the product is to have can be determined. The shorter the time the finished foam is in the expansion chamber, the more sealed and glassy the surface is. Similarly, a longer time will form a more matt surface with open cell structure at some points in the surface. See Fig 15.

A brief increase in temperature (1 - 3 min) in the range 1000 - 1100 degrees C by means of indirect heat on the moulds will give an increase in sealing of the surface that is in direct contact with the wall. The moulds can be made of graphite.

According to one aspect, the atmosphere in the expansion chamber may be controlled. For example, supply of an inert gas such as argon or nitrogen will reduce oxidation on the moulds if they are of graphite or other material that oxidises at high temperature.

A rapid cooling of the finished foam will give a higher pressure drop in towards the centre of the expanded foam. Similarly, a slow cooling will reduce pressure drop in towards the centre of the expanded foam. It is therefore possible to influence the absolute cell size in towards the centre of the expanded foam by changing the rate of the cooling process.

The glass mixture will achieve a melting point temperature within the extruder chamber. Once molten, the molten glass will be electrically conductive, and have a certain electrical resistance. According to an aspect of the invention, electrical voltage is applied to the two extruder pipes (30,31) such that the electrical resistance (R) when the glass mass during heating passes 900 degrees C helps to heat the glass mass further and thus ensure a more homogeneous heating at high temperatures and hence secure a maximally even viscosity of the glass mass before extrusion. In such instance, the extruder pipes may be constructed of a material that is both electrically conductive in the sense of being arranged to supply a current to the molten glass for resistive heating, as well as being suitable for induction heating, for example graphite, steel or other appropriate material.

### Exemplary embodiments:

Results of exemplary embodiments using crushed and washed recycled glass of fraction 0 - 1.6 mm are shown in figures 9-14. We have used SiC in combination with MnO₂ and Si₃N₄ in combination with MnO₂ in the different runs. The pressure has varied from 2 bar to 4 bar in the extruder chamber. Temperature up to 1040 degrees C in extruder chamber and 980 degrees C in expansion chamber.

### Reaction equations:

Example 1: SiC+4MnO₂ -> SiO₂+4MnO+CO₂

Example 2: ½ Si₃N₄+3MnO₂ -> ³/₂SiO₂+3MnO+N₂

Figure 9 shows extruded foamed glass pellets of dimension 20mm x 20mm x 400mm. The mixture consists of 97% crushed, washed recycled glass 0 - 1.6 mm, reactive ingredient 2% SiC, oxidant 1% MnO₂. Block density 320 g/l. Sealed surface. Homogeneous and dense cell structure. Temperature extruder chamber 1040 degrees C. Temperature expansion chamber 980 degrees C. Positive pressure in extruder chamber 3 bar.

Figure 10 shows a section of a pellet as shown in Figure 9. Homogeneous, dense cell structure. Sharp edges, sealed surface. Compressive strength > 100 kg / cm².

Figure 11 shows crushed extruded foamed glass block based on 97% crushed recycled glass, 3% Si₃N₄ and 1% MnO₂. Temperature extruder 1000 degrees C. Temperature expansion chamber 980 degrees C. Positive pressure in extruder chamber 2 bar. Density 270 g/l.

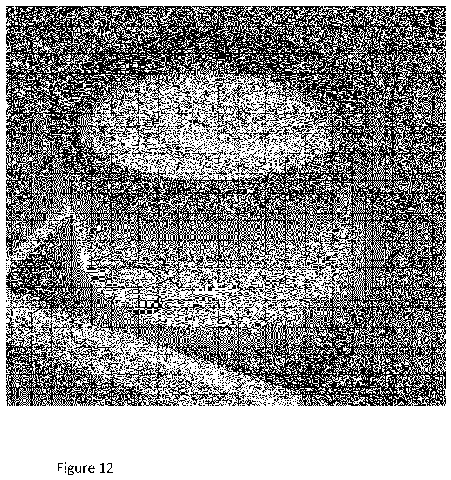

Figure 12 shows extruded foamed glass as in Figure 11, extruded into a graphite mould via a nozzle Ø6 mm. Diameter mould 270 mm. Volume 21. Sealed and impermeable surface. Density 270 g/l.

Figure 13 shows a tubular element of extruded foamed glass based on SiC as reactive ingredient as in Figure 9, 3D printed into a mould to form a tubular element for insulation and fireproofing. Inner diameter 70 mm and outer diameter 146 mm. Wall thickness 38 mm.

Figure 14 shows an element of extruded foamed glass based on Si₃N₄ as reactive ingredient as in Figure 11, 3D printed into a mould to form a tubular element for insulation and fireproofing. Inner diameter 70 mm and outer diameter 146 mm. Wall thickness 38 mm.

## Claims

1. An apparatus for the production of foamed glass, comprising
a. A dosing chamber (2) for receiving a glass mixture, said glass mixture comprising crushed or ground glass mixed with a foaming agent,
b. A sluice chamber (6) arranged to receive a volume of glass mixture from the dosing chamber, said sluice chamber being separated from the dosing chamber by a first closable valve (3), said sluice chamber further comprising a pressure source (4,5), said pressure source arranged to apply a positive operating pressure,
c. A feed chamber (18) comprising a pressure vessel (10) arranged to receive a volume of glass mixture under pressure from the sluice chamber(6), said feed chamber (18) separated from the sluice chamber (6) by a second closable valve (7), said feed chamber (18) comprising a pressure source (11) arranged to apply a pressure equal to the operating pressure, and a feed device (22),
d. An extruder chamber (26) arranged to receive a volume of glass mixture from the feed chamber (18) via the feed device (22), said extruder chamber (26) being subjected to the positive operating pressure and comprising a heat source (28.1, 28.2) arranged to raise the temperature of the interior of the extruder chamber to an operating temperature at which the crushed or ground glass melts, and which activates the foaming agent, thereby forming a viscous foamed glass material,
e. A nozzle section (40) comprising a chamber (26.1) arranged at an end of the extruder chamber, arranged for receiving the viscous foamed glass material from the extruder chamber under influence of the positive operating pressure, said nozzle section comprising one or more nozzles (45) at an end of the nozzle section, through which the viscous foamed glass material may exit under influence of the positive operating pressure,
wherein the extruder chamber comprises an inner extruder pipe (31) and a concentrically arranged outer extruder pipe (30), together defining an annular space for receiving the glass mixture from the feed device, and further wherein the heat source of the extruder chamber comprises one or more induction coils arranged for heating the inner and outer extruder pipes.

2. The apparatus according to claim 1, **characterised in that** the induction coils comprise an internal induction coil (28.2) arranged to supply heat to inner extruder pipe (31) and an external induction coil (28) arranged to supply heat to outer extruder piper (30).

3. The apparatus according to one of the preceding claims, **characterised in that** a radial and axial slot opening (27) is provided between the two extruder pipes (30,31).

4. The apparatus according to one of the preceding claims, **characterised in that** the extruder pipes (30,31) are made of graphite, steel or other material that is both electrically conductive and capable of being heated by induction.

5. The apparatus according to one of the preceding claims, **characterised in that** thermal insulation (32) is arranged between the extruder pipes (30,31) and the induction coils, and that the extruder pipes are electrically insulated.

6. The apparatus according to one of the preceding claims, **characterised in that** the apparatus is configured so that an electric voltage can be applied to the two extruder pipes (30,31) such that an electric resistance (R) supplies heat to a molten glass mass achieved when the glass mixture has been heated by the induction coils beyond 900 degrees C.

7. An apparatus according to one of the preceding claims wherein the nozzles (45) are interchangeable and are provided in a variety of profiles for producing a desired product profile.

8. An apparatus according to one of the preceding claims, wherein extruder chamber is arranged to operate at a temperature of from 900 - 1150 degrees Celsius.

9. An apparatus according to one of the preceding claims, wherein the pressure source (4, 5) is arranged to provide an operating pressure of from above zero bar to 10 bar.

10. A method for producing foamed glass, where crushed or ground glass mixed with a foaming agent is melted and foamed, **characterized in** the method comprises:
a. Adding a foaming agent to crushed or ground glass to form a glass mixture,
b. Transporting the glass mixture to a closed sluice chamber (6),
c. Pressurizing the sluice chamber to a positive operating pressure,
d. Transferring the glass mixture under pressure to a pressurized feed chamber (18),
e. Dispensing the glass mixture in a controlled manner from the feed chamber (18) to a pressurized and heated extruder chamber (26), said extruder chamber comprising the space between two concentrically arranged extruder pipes (30,31), said extruder chamber being heated by induction coils (28.1, 28.2),
f. Heating the glass mixture to an operating temperature at which the glass melts and the foaming agent is activated, thereby forming a viscous compressed foamed glass material,
g. Passing the viscous compressed foamed glass material under pressure through one or more nozzles (45) to an expansion chamber , said expansion chamber having a pressure lower than the operating pressure and a temperature lower than the operating temperature,
h. Allowing the viscous compressed foamed glass material to expand and cool to a solid, foamed glass product.

11. The method for producing foamed glass according to claim 10, further comprising the step of applying a voltage to the extruder chamber once the temperature of the glass mixture exceeds the melting temperature of the glass mixture, whereby electrical resistance causes further heating of the molten glass mixture.

## Patentansprüche

1. Vorrichtung zur Herstellung von Schaumglas, umfassend
a. eine Dosierkammer (2) zum Aufnehmen eines Glasgemisches, wobei das Glasgemisch zerstoßenes oder gemahlenes Glas umfasst, das mit einem Schaummittel gemischt ist,
b. eine Schleusenkammer (6), die dafür angeordnet ist, ein Glasgemischvolumen von der Dosierkammer aufzunehmen, wobei die Schleusenkammer durch ein erstes schließbares Ventil (3) von der Dosierkammer getrennt ist, wobei die Schleusenkammer ferner eine Druckquelle (4, 5) umfasst, wobei die Druckquelle dafür angeordnet ist, einen positiven Betriebsdruck anzulegen,
c. eine Zuführkammer (18), die einen Druckbehälter (10) umfasst, der dafür angeordnet ist, ein unter Druck stehendes Glasgemischvolumen von der Schleusenkammer(6) aufzunehmen, wobei die Zuführkammer (18) durch ein zweites schließbares Ventil (7) von der Schleusenkammer (6) getrennt ist, wobei die Zuführkammer (18) Folgendes umfasst: eine Druckquelle (11), die dafür angeordnet ist, einen Druck anzulegen, der gleich dem Betriebsdruck ist, und eine Zuführvorrichtung (22),
d. eine Extruderkammer (26), die dafür angeordnet ist, ein Glasgemischvolumen von der Zuführkammer (18) über die Zuführvorrichtung (22) aufzunehmen, wobei die Extruderkammer (26) dem positiven Betriebsdruck ausgesetzt ist und eine Wärmequelle (28.1, 28.2) umfasst, die dafür angeordnet ist, die Temperatur des Inneren der Extruderkammer auf eine Betriebstemperatur zu erhöhen, bei der das zerstoßene oder gemahlene Glas schmilzt und die das Schaummittel aktiviert, wodurch ein viskoses Schaumglasmaterial gebildet wird,
e. einen Düsenabschnitt (40), der eine Kammer (26.1) umfasst, die an einem Ende der Extruderkammer angeordnet ist und der dafür angeordnet ist, unter dem Einfluss des positiven Betriebsdrucks das viskose Schaumglasmaterial von der Extruderkammer aufzunehmen, wobei der Düsenabschnitt an einem Ende des Düsenabschnitts eine oder mehrere Düsen (45) umfasst, durch die das viskose Schaumglasmaterial unter dem Einfluss des positiven Betriebsdrucks austreten kann,
wobei die Extruderkammer ein inneres Extruderrohr (31) und ein konzentrisch angeordnetes äußeres Extruderrohr (30) umfasst, die zusammen einen ringförmigen Raum zur Aufnahme des Glasgemisches von der Zuführvorrichtung definieren, und wobei ferner die Wärmequelle der Extruderkammer eine oder mehrere Induktionsspulen umfasst, die dafür angeordnet sind, das innere und äußere Extruderrohr zu erwärmen.

2. Vorrichtung nach Anspruch 1, **dadurch gekennzeichnet, dass** die Induktionsspulen Folgendes umfassen: eine interne Induktionsspule (28.2), die dafür angeordnet ist, dem inneren Extruderrohr (31) Wärme zuzuführen, und eine externe Induktionsspule (28), die dafür angeordnet ist, dem äußeren Extruderrohr (30) Wärme zuzuführen.

3. Vorrichtung nach einem der vorhergehenden Ansprüche,
**dadurch gekennzeichnet, dass** eine radiale und axiale Schlitzöffnung (27) zwischen den zwei Extruderrohren (30, 31) vorgesehen ist.

4. Vorrichtung nach einem der vorhergehenden Ansprüche,
**dadurch gekennzeichnet, dass** die Extruderrohre (30, 31) aus Graphit, Stahl oder einem anderen Material gefertigt sind, das sowohl elektrisch leitend als auch imstande ist, durch Induktion erwärmt zu werden.

5. Vorrichtung nach einem der vorhergehenden Ansprüche,
**dadurch gekennzeichnet, dass** eine thermische Isolierung (32) zwischen den Extruderrohren (30, 31) und den Induktionsspulen angeordnet ist und dass die Extruderrohre elektrisch isoliert sind.

6. Vorrichtung nach einem der vorhergehenden Ansprüche,
**dadurch gekennzeichnet, dass** die Vorrichtung derart ausgestaltet ist, dass eine elektrische Spannung an die zwei Extruderrohre (30, 31) angelegt werden kann, sodass ein elektrischer Widerstand (R) einer geschmolzenen Glasmasse, die erzielt wird, wenn das Glasgemisch durch die Induktionsspulen über 900 Grad C erwärmt wird, Wärme zuführt.

7. Vorrichtung nach einem der vorhergehenden Ansprüche, wobei die Düsen (45) austauschbar sind und mit verschiedenen Profilen versehen sind, um ein gewünschtes Produktprofil zu erzeugen.

8. Vorrichtung nach einem der vorhergehenden Ansprüche, wobei die Extruderkammer dafür angeordnet ist, bei einer Temperatur von 900 bis 1150 Grad Celsius betrieben zu werden.

9. Vorrichtung nach einem der vorhergehenden Ansprüche, wobei die Druckquelle (4, 5) dafür angeordnet ist, einen Betriebsdruck von über null bar bis 10 bar bereitzustellen.

10. Verfahren zur Herstellung von Schaumglas, wobei zerstoßenes oder gemahlenes Glas, das mit einem Schaummittel gemischt wird, geschmolzen und geschäumt wird, **dadurch gekennzeichnet, dass** das Verfahren Folgendes umfasst:
a. Zugeben eines Schaummittels zu zerstoßenem oder gemahlenem Glas, um ein Glasgemisch zu bilden,
b. Befördern des Glasgemisches zu einer geschlossenen Schleusenkammer (6),
c. Druckbeaufschlagen der Schleusenkammer auf einen positiven Betriebsdruck,
d. Überführen des unter Druck stehenden Glasgemisches in eine druckbeaufschlagte Zuführkammer (18),
e. Abgeben des Glasgemisches auf kontrollierte Weise von der Zuführkammer (18) in eine druckbeaufschlagte und erwärmte Extruderkammer (26), wobei die Extruderkammer den Raum zwischen zwei konzentrisch angeordneten Extruderrohren (30, 31) umfasst, wobei die Extruderkammer durch Induktionsspulen (28.1, 28.2) erwärmt wird,
f. Erwärmen des Glasgemisches auf eine Betriebstemperatur, bei der das Glas schmilzt und das Schaummittel aktiviert wird, wodurch ein viskoses verdichtetes Schaumglasmaterial gebildet wird,
g. Leiten des unter Druck stehenden viskosen verdichteten Schaumglasmaterials durch eine oder mehrere Düsen (45) zu einer Expansionskammer, wobei die Expansionskammer einen Druck, der niedriger ist als der Betriebsdruck, und eine Temperatur, die niedriger ist als die Betriebstemperatur, aufweist,
h. Expandieren- und Abkühlenlassen des viskosen verdichteten Schaumglasmaterials zu einem festen Schaumglasprodukt.

11. Verfahren zur Herstellung von Schaumglas nach Anspruch 10, ferner umfassend den Schritt des Anlegens einer Spannung an die Extruderkammer, sobald die Temperatur des Glasgemisches die Schmelztemperatur des Glasgemisches übersteigt, wobei ein elektrischer Widerstand eine weitere Erwärmung des geschmolzenen Glasgemisches bewirkt.

## Revendications

1. Appareil pour la production de verre mousse, comprenant
a. une chambre de dosage (2) pour recevoir un mélange de verre, ledit mélange de verre comprenant du verre concassé ou broyé mélangé avec un agent moussant,
b. une chambre de sas (6) agencée pour recevoir un volume de mélange de verre à partir de la chambre de dosage, ladite chambre de sas étant séparée de la chambre de dosage par une première vanne fermable (3), ladite chambre de sas comprenant en outre une source de pression (4, 5), ladite source de pression étant agencée pour appliquer une pression de fonctionnement positive,
c. une chambre d'alimentation (18) comprenant un récipient sous pression (10) agencé pour recevoir un volume de mélange de verre sous pression à partir de la chambre de sas (6), ladite chambre d'alimentation (18) étant séparée de la chambre de sas (6) par une seconde vanne fermable (7), ladite chambre d'alimentation (18) comprenant une source de pression (11) agencée pour appliquer une pression égale à la pression de fonctionnement, et un dispositif d'alimentation (22),
d. une chambre d'extrusion (26) agencée pour recevoir un volume de mélange de verre à partir de la chambre d'alimentation (18) par l'intermédiaire du dispositif d'alimentation (22), ladite chambre d'extrusion (26) étant soumise à la pression de fonctionnement positive et comprenant une source de chaleur (28.1, 28.2) agencée pour élever la température de l'intérieur de la chambre d'extrusion jusqu'à une température de fonctionnement à laquelle le verre concassé ou broyé fond, et qui active l'agent moussant, formant ainsi un matériau de verre mousse visqueux,
e. une section de buse (40) comprenant une chambre (26.1) agencée à une extrémité de la chambre d'extrusion, agencée pour recevoir le matériau de verre mousse visqueux à partir de la chambre d'extrusion sous l'effet de la pression de fonctionnement positive, ladite section de buse comprenant une ou plusieurs buses (45) à une extrémité de la section de buse, par lesquelles le matériau de verre mousse visqueux peut sortir sous l'effet de la pression de fonctionnement positive,
dans lequel la chambre d'extrusion comprend un tube d'extrusion interne (31) et un tube d'extrusion externe (30) agencé concentriquement, définissant ensemble un espace annulaire pour recevoir le mélange de verre à partir du dispositif d'alimentation, et en outre dans lequel la source de chaleur de la chambre d'extrusion comprend une ou plusieurs bobines d'induction agencées pour chauffer les tubes d'extrusion interne et externe.

2. Appareil selon la revendication 1, **caractérisé en ce que** les bobines d'induction comprennent une bobine d'induction interne (28.2) agencée pour fournir de la chaleur au tube d'extrusion interne (31) et une bobine d'induction externe (28) agencée pour fournir de la chaleur au tube d'extrusion externe (30).

3. Appareil selon l'une quelconque des revendications précédentes, **caractérisé en ce qu'**une ouverture à fente radiale et axiale (27) est fournie entre les deux tubes d'extrusion (30, 31).

4. Appareil selon l'une quelconque des revendications précédentes, **caractérisé en ce que** les tubes d'extrusion (30, 31) sont en graphite, en acier ou en un autre matériau qui est à la fois électroniquement conducteur et capable d'être chauffé par induction.

5. Appareil selon l'une quelconque des revendications précédentes, **caractérisé en ce qu'**une isolation thermique (32) est agencée entre les tubes d'extrusion (30, 31) et les bobines d'induction, et **en ce que** les tubes d'extrusion sont isolés électriquement.

6. Appareil selon l'une quelconque des revendications précédentes, **caractérisé en ce que** l'appareil est configuré de sorte qu'une tension électrique peut être appliquée aux deux tubes d'extrusion (30, 31) de sorte qu'une résistance électrique (R) fournit de la chaleur à une masse de verre fondu obtenue lorsque le mélange de verre a été chauffé par les bobines d'induction au-delà de 900 degrés C.

7. Appareil selon l'une quelconque des revendications précédentes, dans lequel les buses (45) sont interchangeables et sont fournies en une variété de profils pour produire un profil de produit souhaité.

8. Appareil selon l'une quelconque des revendications précédentes, dans lequel la chambre d'extrusion est agencée pour fonctionner à une température de 900 à 1150 degrés Celsius.

9. Appareil selon l'une quelconque des revendications précédentes, dans lequel la source de pression (4, 5) est agencée pour fournir une pression de fonctionnement depuis au-dessus de zéro bar jusqu'à 10 bars.

10. Procédé pour préparer un verre mousse, dans lequel du verre concassé ou broyé mélangé avec un agent moussant est fondu et moussé, **caractérisé en ce que** ce procédé comprend :
a. l'addition d'un agent moussant au verre concassé ou broyé pour former un mélange de verre,
b. le transport du mélange de verre jusqu'à une chambre de sas (6) fermée,
c. la mise sous pression de la chambre de sas à une pression de fonctionnement positive,
d. le transfert du mélange de verre sous pression jusqu'à une chambre d'alimentation (18) sous pression,
e. la distribution du mélange de verre d'une manière contrôlée à partir de la chambre d'alimentation (18) jusqu'à une chambre d'extrusion (26) sous pression et chauffée, ladite chambre d'extrusion comprenant l'espace entre deux tubes d'extrusion (30, 31) agencés concentriquement, ladite chambre d'extrusion étant chauffée par des bobines d'induction (28.1, 28.2),
f. le chauffage du mélange de verre jusqu'à une température de fonctionnement à laquelle le verre fond et l'agent moussant est activé, formant ainsi un matériau de verre mousse visqueux comprimé,
g. le fait de faire passer le matériau de verre mousse visqueux comprimé sous pression par une ou plusieurs buses (45) jusqu'à une chambre d'expansion, ladite chambre d'expansion ayant une pression inférieure à la pression de fonctionnement et une température inférieure à la température de fonctionnement,
h. le fait de laisser le matériau de verre mousse visqueux comprimé s'expanser et refroidir en un produit de verre mousse solide.

11. Procédé pour préparer un verre mousse selon la revendication 10, comprenant en outre l'étape consistant à appliquer une tension à la chambre d'extrusion lorsque la température du mélange de verre dépasse la température de fusion du mélange de verre, de sorte que la résistance électrique provoque un chauffage supplémentaire du mélange de verre fondu.
